# FASCICULE DE BREVET EUROPEEN

(11) **EP 0 936 014 B1**
(45) Date de publication et mention de la délivrance du brevet: **17.04.2002**
(21) Numéro de dépôt: 99470001.1
(22) Date de dépôt: 19.01.1999
(51) Int. Cl.: B23C 5/10, B23B 51/02

(54) **Outil de coupe, notamment foret, à géométrie améliorée**
Cutting tool, specially drill, with improved geometry
Schneidwerkzeug, insbesondere Bohrer,mit verbesserter Geometrie

(30) Priorité: 20.01.1998 FR 9800689
(43) Date de publication de la demande: 18.08.1999
(73) Titulaire: Pagnon, José Auguste Fernand, 88303 Neufchateau (FR)
(72) Inventeur: Pagnon, José Auguste Fernand, 88303 Neufchateau (FR)
(74) Mandataire: Ballot, Paul Denis Jacques

(56) Documents cités:
- EP-A- 0 365 218
- EP-A- 0 482 982
- DE-A- 2 050 987
- DE-C- 669 906
- FR-A- 2 382 965
- PATENT ABSTRACTS OF JAPAN vol. 5, no. 68 (M-067), 8 mai 1981 & JP 56 021711 A (SUMITOMO), 28 février 1981

## Description

La présente invention concerne les outils de coupe, en particulier les forets, mais peut également s'appliquer à d'autres outils d'usinage par enlèvement de copeaux, tels que notamment des fraises, alésoirs, tarauds, etc.

Elle s'adresse plus particulièrement aux outils destinés à l'usinage des matériaux durs, difficiles à usiner, et/ou ayant subis divers traitements, par exemple aux aciers trempés, nitrurés, cémentés, etc. Dans la technique actuelle, les usinages sont classiquement réalisés dans les pièces encore facilement usinables, avant traitements thermiques ou physico-chimiques. Après ces traitements, il est pratiquement impossible de retoucher en usinage certaines pièces traitées, des moules, des matrices, etc, et en cas de défauts ou d'oubli d'usinages sur une pièce détectés après traitements, une telle pièce ne peut qu'être rebutée. Ceci est d'autant plus gênant que les traitements eux-même sont souvent susceptibles de créer des déformations de la pièce, et donc d'altérer des dimensions et formes qui étaient correctes avant traitement.

Bien que s'appliquant donc essentiellement à des pièces en acier ou matériaux durs similaires, l'utilisation des outils selon l'invention n'est toutefois pas limitée à ces matériaux, et pourra bien évidement s'étendre à des pièces en diverses autres matières, notamment composites ou synthétiques.

Les forets classiques, ou autres outils de coupe similaires en carbures, ne sont pas suffisamment résistants pour réaliser des usinages dans des conditions difficiles de dureté des matériaux usinés, tels que ceux mentionnés auparavant. Ils n'ont pas une ténacité suffisante pour résister aux importants efforts de coupe dûs à la dureté élevée de la matière usinée, et la formation, l'enroulement, et l'évacuation des copeaux n'est pas assurée de manière satisfaisante, ce qui provoque des problèmes de collage et de bourrage des copeaux. L'utilisation d'outils ayant la lame ou l'arête de coupe réalisée en matériau très dur, par exemple carbure ou céramique permet en principe d'usiner les matières à forte dureté, mais ces outils sont cassants. Des traitements de surface des lames de coupe (par exemple traitements PVD ou CVD mentionnés dans EP 591 122) permettent aussi d'améliorer la dureté, mais ne permettent cependant pas d'assurer une durabilité suffisante des outils.

Les forets classiques ont une arête de coupe périphérique hélicoïdale, l'arête de coupe étant formée par le bord d'une face de coupe constituée par un côté d'une goujure hélicoïdale réalisée dans le corps du foret, cette goujure débouchant dans la face d'extrémité du foret, de forme généralement conique. La goujure a une section de forme générale arrondie, sensiblement en demi cercle lorsque vue en section perpendiculairement à l'axe du foret. Le débouché de la goujure dans la face frontale du foret forme une arête de coupe frontale qui est donc également courbe et concave. Il a été constaté que cela résultait en des bourrages de copeaux pouvant conduire à l'éclatement du foret, ceci étant d'ailleurs favorisé par la concavité de l'arête de coupe et par sa relative fragilité lorsque le foret est en matériau plus dur mais donc plus cassant.

On connaît également par le document FR-A-2 382 965 un foret à pointer dont les arêtes de coupe sur la pointe sont rectilignes et s'arrêtent à proximité de l'axe du foret. Cependant, l'âme de ce foret est très mince.

Le document EP 591 122 précité décrit une fraise ayant des caractéristiques géométriques et une nature de matériau et de traitement améliorées pour présenter une plus grande résistance et un meilleur fini de la surface usinée. Il s'agit cependant d'une fraise à pointe ronde et la face de coupe est également, en section, concave comme on le voit figure 2 de ce document. Outre sa pointe ronde, cette fraise a donc une géométrie proche de la géométrie classique des forets, indiquée au préalable.

On connaît aussi des forets ayant des faces de coupe planes, l'arête de coupe périphérique s'étendant parallèlement à l'axe du foret, comme décrit dans US 5641251. Un inconvénient notable d'une telle géométrie est qu'elle ne permet pas d'assurer un bon centrage du foret, puisque la totalité de l'arête de coupe est dans un même plan radial.

Des problèmes similaires se posent avec des outils autres que les forets, dés lors que les caractéristiques des matériaux à usiner conduisent à créer des efforts de coupe importants.

La présente invention a pour but d'apporter une solution aux divers problèmes évoqués ci-dessus et vise en particulier à permettre l'usinage, et notamment le perçage, dans des matériaux durs tels que par exemple les aciers traités, et ceci avec une fiabilité, une précision, et une durabilité suffisante.

Avec ces objectifs en vue, l'invention a pour objet un foret selon la revendication 1.

Grâce à la rectitude de la section droite de la face de coupe, les efforts de coupe s'exercent selon une direction précisément perpendiculaire à la direction radiale du foret, ou même légèrement orientée vers l'axe de l'outil, et non vers l'extérieur comme cela se produit lorsque la face de coupe est concave. Les efforts tendant à écarter l'arête coupante par rapport à l'axe sont ainsi supprimés ou au moins fortement réduits, réduisant corrélativement toute tendance à l'écaillage ou l'éclatement du foret. De plus, l'hélice de l'arête permet, de manière connue en soi, de mieux répartir l'effort de coupe le long de l'arête, et facilite le dégagement des copeaux.

Ledit dégagement permet, en plus de former l'arête de coupe jusqu'à proximité directe de l'axe, d'assurer une bonne évacuation des copeaux découpés par la partie centrale du foret, qui peuvent ainsi rejoindre la goujure hélicoïdale et s'évacuer par celle-ci.

Selon une disposition particulière, la goujure comporte une face complémentaire s'étendant entre le bord central de la face de coupe, situé vers le coeur du foret, et la périphérie du foret, la dite face complémentaire ayant aussi un profil sensiblement rectiligne en section droite et faisant un angle de 90 à 110° par rapport à la face de coupe, l'angle étant préférentiellement de 100°. Cet angle est préférentiellement un angle le plus vif possible, avec un rayon de raccordement faible, inférieur à 1 mm ou même 0,1 mm selon les dimensions du foret. Un tel angle vif présente l'avantage de faciliter le décollement du copeau de la face de coupe, puisque le copeau, par sa courbure naturelle, ne peut, lorsqu'il vient au contact de la face complémentaire, que se soulever et s'écarter de la face de coupe pratiquement dés le bord coupant de celle-ci. Au contraire, si la goujure à une forme arrondie comme dans les forets classiques, le copeau glisse en restant au contact de la paroi de la goujure, et frotte contre celle-ci en provoquant usure et surtout échauffement.

Selon une réalisation préférentielle, la partie de l'arête de coupe située à distance de l'axe du foret est décalée par rapport au dit axe, et se prolonge jusqu'à ce dernier par un biseau. Cela évite que les efforts appliqués vers l'extrémité radialement extérieure de l'arête soient dirigés vers l'extérieur, comme c'est le cas lorsque la face de coupe est concave, et donc cela évite les risques d'éclatement du foret. On notera incidemment, pour être plus précis, que l'arête de coupe est même plutôt légèrement convexe, puisque résultant de l'intersection géométrique du cône de la pointe du foret avec la surface hélicoïdale de la face de coupe, ce qui est d'autant plus favorable pour la résistance du foret.

La partie en biseau permet d'affiner au maximum l'âme du foret au niveau de sa pointe extrême, puisque les extrémités affinées des biseaux se rejoignent quasiment sur l'axe du foret.

Le biseau de l'arête de coupe frontale est formé par un creusement effectué dans la face d'attaque du dégagement jusqu'à rejoindre l'axe, ce creusement étant relié à la dite surface d'attaque par un chanfrein.

Préférentiellement encore, au moins les faces adjacentes aux arêtes de coupe latérales et frontales sont revêtues par un dépôt chimique ou physique en phase vapeur à base de l'un ou plusieurs des éléments suivants : titane, aluminium, azote.

L'invention a aussi pour objet un procédé de réalisation d'un outil tel que défini ci-dessus, ce procédé étant caractérisé en ce que les surfaces de la goujure et notamment la face de coupe sont obtenues par meulage avec une meule ayant un profil correspondant au profil de la goujure et dont l'axe de rotation est, dans un plan parallèle à l'axe du foret, incliné par rapport à l'axe du foret d'un angle prédéterminé correspondant à l'angle d'hélice.

D'autres caractéristiques et avantages apparaîtront dans la description qui va être faite d'un foret conforme à l'invention.

On se reportera aux dessins annexés dans lesquels :

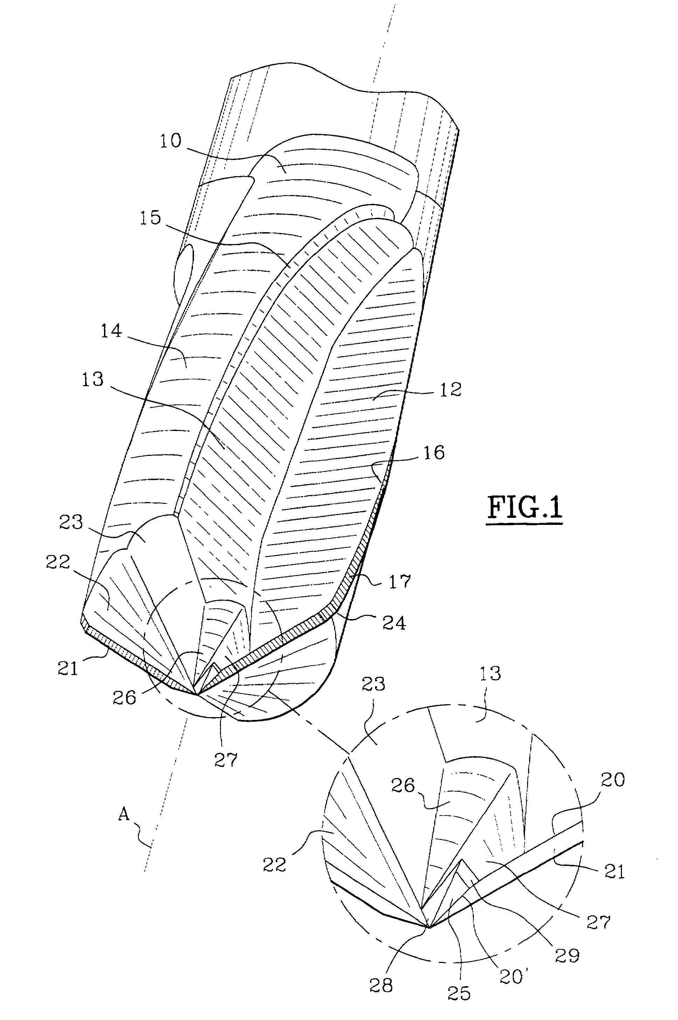

- la figure 1 est une vue en perspective du foret, avec une vue de détail de sa pointe,
- la figure 2 est une vue latérale du foret, selon la flèche F de la figure 4,
- la figure 3 est une vue en bout du foret,
- la figure 4 est une section du foret selon un plan perpendiculaire à l'axe,
- la figure 5 est une vue illustrant la mise en forme de la goujure et l'affûtage de la face de coupe,
- la figure 6 est une vue correspondante illustrant la position de la meule par rapport à l'hélice de la goujure,
- la figure 7 est une vue illustrant schématiquement la réalisation du biseau au moyen d'une meule boisseau,
- la figure 8 est une vue de dessus de la figure 7,
- la figure 9 illustre la réalisation du dégagement de la pointe du foret,
- la figure 10 illustre la réalisation du chanfrein entre le biseau et la surface d'attaque.

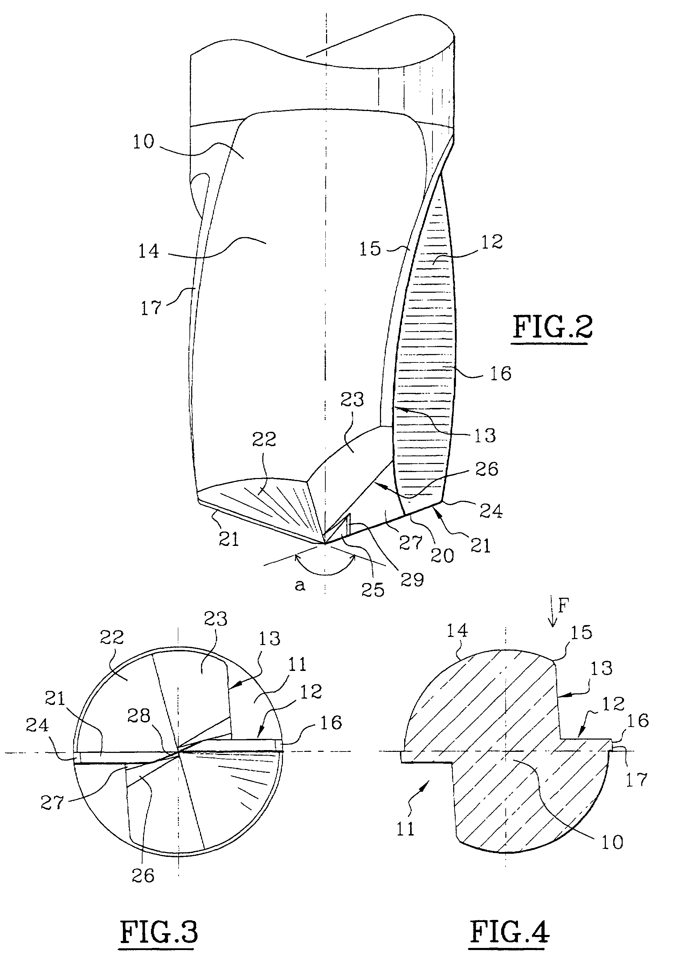

Le foret représenté comporte une âme 10 et deux parties actives symétriques par rapport à l'axe A. Pour chacune de ces parties le foret comporte une goujure 11 hélicoïdale, avec un angle d'hélice de 10° par exemple, délimitée par une face de coupe 12 et une face complémentaire 13 qui se raccorde sur la surface périphérique du corps 14 par un chanfrein 15, par exemple un arrondi de rayon 2 mm. La face de coupe 12 présente, en section visible sur la figure 4, une forme rectiligne, décalée par rapport à l'axe A. La face complémentaire 13 fait avec la face de coupe 12 un angle d'environ 100° par exemple. Le bord de la face de coupe 12 constitue une arête coupante 16 hélicoïdale, entre la dite face de coupe et une partie de surface extérieure du foret appelée témoin 17. Ce témoin à une faible largeur, de l'ordre de 1 mm par exemple, et se trouve en décrochement proéminent vers l'extérieur par rapport à la surface extérieure, ou dos, de l'ensemble du corps 14, comme on le voit bien figure 4. On notera que c'est grâce à l'hélice du témoin que le centrage du foret est optimal, car on a en fait une sorte d'appui de ce témoin contre la paroi du trou déjà réalisé sur des points de génératrices différentes de celle situé dans le plan radial comportant l'arête de coupe frontale 20. Autrement dit, les efforts de coupe s'exerçant au niveau de l'arête 20 sont en quelque sorte soutenus par le fait que le témoin est, à distance de la pointe, en contact avec la paroi du trou dans des zones angulairement décalées par rapport à l'arête de coupe.

L'ensemble du corps a par ailleurs une très faible conicité inverse, c'est à dire une section diminuant de la pointe vers la queue du foret, de l'ordre de 0°1' d'angle, ce qui évite ou au moins limite l'échauffement par frottement du corps du foret contre la paroi du trou foré.

La pointe du foret présente un angle obtus a, par exemple de 144°, entre les arêtes de coupe 20. A partir de l'arête de coupe 20, la face frontale de la pointe du foret présente :
- une face en dépouille primaire 21, sur une distance de l'ordre de 1 mm par exemple, à environ 8°, dans le prolongement de la zone témoin 17, à laquelle elle se raccorde par un petit chanfrein 24 à 45°,
- une dépouille secondaire 22, par exemple à 25° sur un secteur angulaire d'environ 75°,
- une troisième dépouille 23 avec un angle encore plus accentué, qui rejoint la face complémentaire 13 de la goujure opposée.

Du fait que la face de coupe 12 est décalée, en avant dans le sens de rotation du foret, par rapport à l'axe A comme on le voit bien figure 4, la partie 20' la plus centrale de l'arête de coupe 20 est inclinée par rapport à sa partie plus éloignée de l'axe. Ceci est obtenu par la réalisation, au niveau de la pointe d'extrémité du foret, d'une face en biseau 25 qui fait que la face en dépouille primaire 21 s'amenuise vers l'axe du foret.

Par ailleurs, un dégagement est réalisé dans la pointe du foret, présentant une surface 26 sensiblement dans un plan perpendiculaire à la face de coupe 12, et une surface d'attaque 27, inclinée d'environ -5° par exemple par rapport à la face de coupe 12, et qui rejoint la face de coupe 12 au niveau de l'arête 20, assurant la continuité de cette arête.

Le biseau 25 est obtenu par un creusement jusqu'à la pointe du foret, qui forme une surface 28 sensiblement perpendiculaire à la face en biseau 25 et sensiblement coplanaire avec la dépouille 23. La face en biseau 25 se raccorde avec la surface 27 par un petit chanfrein 29.

La géométrie de la pointe du foret permet notamment d'assurer l'autocentrage du foret, sans besoin d'utiliser auparavant un foret de centrage. L'ensemble de cette géométrie permet, du point de vue de l'opération de perçage, d'assurer une coupe la plus efficace possible sur toute la longueur de l'arête de coupe de l'axe A jusqu'à la périphérie du foret, d'obtenir un bon dégagement des copeaux, et, pour l'outil, d'obtenir une très bonne fiabilité et une grande durabilité même en usinage dans des matériaux très durs.

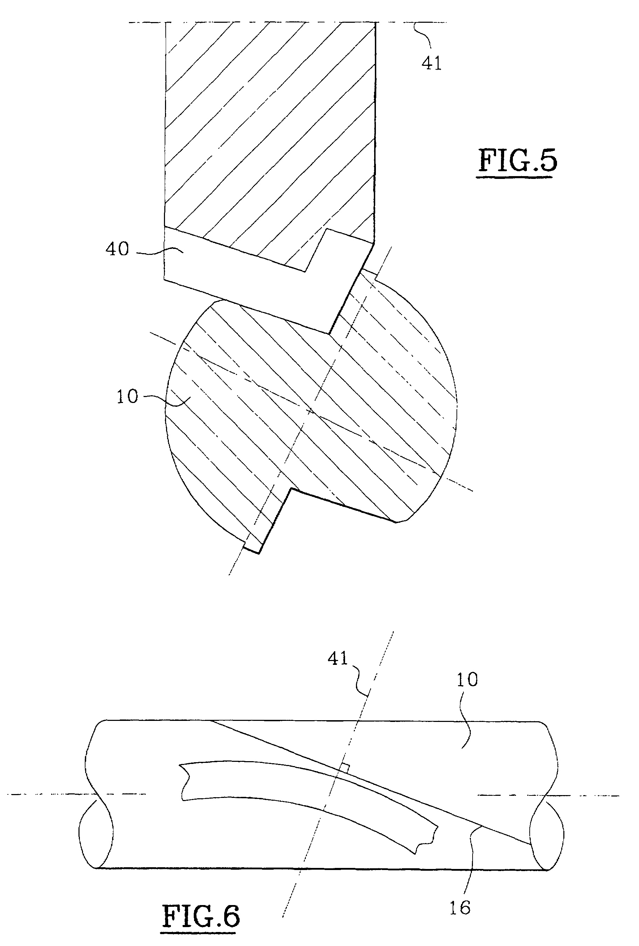

Les figures 5 à 10 illustrent schématiquement le procédé de réalisation de la géométrie complète du foret.

Dans un premier temps, représenté figures 5 et 6, une meule 40 ayant un profil spécial adapté à l'angle de la goujure 11 est utilisée pour former les deux faces 12 et 13 de la goujure en donnant à celles-ci le profil et l'angle d'hélice requis. L'axe 41 de la meule est orienté comme représenté sur les dessins, c'est à dire dans un plan parallèle à l'axe A du foret , et incliné dans ce plan d'un angle correspondant à l'angle d'hélice comme cela est schématisé figure 6.

Puis, dans un deuxième temps, on effectue le taillage du bout du foret, de manière connue en soi, pour réaliser les faces en dépouille 21, 22 et 23.

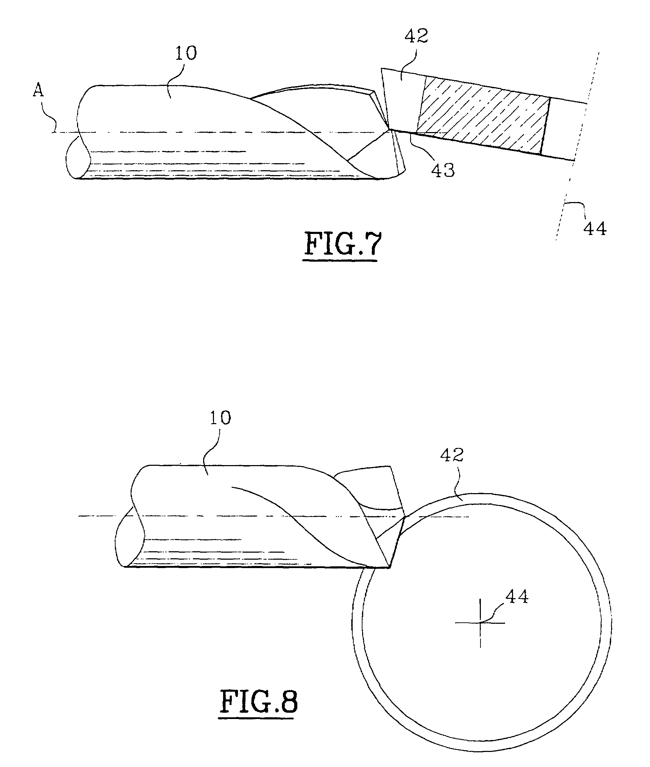

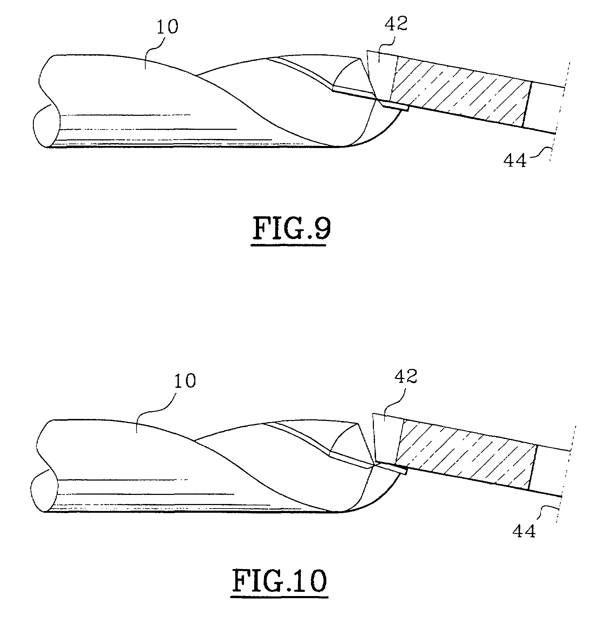

Ensuite, comme représenté figures 7 et 8, on réalise le biseau 25, permettant d'affiner l'âme du foret à sa pointe extrême, à environ 35° par exemple par rapport à la face de coupe 12, la face 43 de la meule 42 étant incliné par rapport à l'axe du foret, de l'ordre de 5° par exemple, et l'axe 44 de la meule étant décalé latéralement comme illustré figure 8.

Dans sensiblement la même position, mais après rotation du foret autour de son axe, comme illustré figure 9, on réalise le dégagement définissant les surfaces 26 et 27, puis de manière similaire, on réalise le chanfrein 29, comme illustré figure 10.

L'outil ainsi réalisé est revêtu ensuite par un procédé de dépôt chimique ou dépôt physique en phase vapeur, par exemple par un revêtement chimique à base de titane, aluminium et azote, de type X-TREM (marque déposée) de la société BALZERS, la dureté de ce revêtement étant de 3700 Vickers.

Avec un outil ainsi réalisé, l'inventeur a pu réaliser dans de l'acier trempé à coeur présentant une dureté de 58 à 64 HRC jusqu'à 300 perçages de diamètre 9,5 mm sur une profondeur de 13 mm sans problèmes et sans usure notable, alors que le procédé antérieur nécessitait de percer avant traitement thermique, aucun foret ne permettant un tel usinage après le traitement de l'acier.

La géométrie de la goujure selon la présente invention pourra être adaptée sur d'autres outils que les forets décrits ci-dessus uniquement à titre d'exemple, notamment sur des fraises, coniques, cylindriques, sphériques, des alésoirs, des tarauds, et tous outils spécifiques servant à l'enlèvement de matières, taillés en mono-dent ou multi-dents.

La matière de l'outil peut être par exemple et de manière générale de l'acier rapide, de l'acier spécial au cobalt, de l'acier fritté, du carbure de tungstène monobloc et brasé, des cermets, céramiques, nitrure de bore cubique, polycristalin, des alliages, tels que par exemple ceux connus sous les appellations tantung et jonaloy, qui sont des alliages coulés contenant du cobalt, du chrome, du tungstène, du tantale, du niobium, du manganèse, du fer et du bore, qui peuvent être brasés ou monoblocs, avec ou sans trous d'huile. L'hélice qui est classiquement à droite, pourra aussi être réalisée avec un pas à gauche.

## Revendications

1. Foret comportant au moins une face de coupe (12) dont le bord, situé à la surface périphérique de l'outil, forme une arête coupante (16) s'étendant hélicoïdalement, la face de coupe constituant une paroi d'une goujure hélicoïdale (11) de dégagement des copeaux, le foret présentant une pointe de forme générale conique, **caractérisé en ce que** la dite face de coupe (12) présente, en section droite perpendiculairement à l'axe de l'outil, un profil rectiligne, et forme au niveau de la pointe une arête de coupe (20) frontale, un dégagement (26, 27) est réalisé dans la pointe entre la partie la plus centrale de l'arête de coupe frontale (20) et le coeur du foret pour que l'arête de coupe frontale (20) se prolonge vers l'axe, ce dégagement débouchant dans la goujure (11), à son extrémité, et présentant une face d'attaque (27) sensiblement en continuité avec la face de coupe (12).

2. Foret selon la revendication 1, **caractérisé en ce que** l'angle d'hélice de l'arête coupante (16) est compris entre 5 et 20 °.

3. Foret selon la revendication 1, **caractérisé en ce que** la goujure (11) comporte une face complémentaire (13) s'étendant entre le bord central de la face de coupe, situé vers l'âme du foret, et la périphérie de l'outil, en faisant un angle de 90 à 110° par rapport à la face de coupe.

4. Foret selon la revendication 3, **caractérisé en ce que** l'angle formé entre la face de coupe (12) et la face complémentaire (13) de la goujure est un angle vif.

5. Foret selon la revendication 1, **caractérisé en ce que** la partie de l'arête de coupe frontale (20) située à distance de l'axe du foret est décalée par rapport au dit axe, et se prolonge jusqu'à ce dernier par un biseau (25).

6. Foret selon la revendication 5, **caractérisé en ce que** le biseau (25) de l'arête de coupe frontale est formé par un creusement effectué dans la face d'attaque (27) jusqu'à rejoindre l'axe, ce creusement étant relié à la dite face d'attaque par un chanfrein (29).

7. Foret selon la revendication 1, **caractérisé en ce que** au moins les faces adjacentes aux arêtes de coupe (16, 20) sont revêtues par un dépôt chimique ou physique en phase vapeur à base de l'un ou plusieurs des éléments suivants : titane, aluminium, azote.

8. Procédé de réalisation d'un foret selon la revendication 1, **caractérisé en ce que** les surfaces (12,13) de la goujure (11) et notamment la face de coupe (12) sont obtenues par meulage avec une meule (40) ayant un profil correspondant au profil de la goujure et dont l'axe de rotation (41) est, dans un plan parallèle à l'axe du foret, incliné par rapport à l'axe du foret d'un angle prédéterminé correspondant à l'angle d'hélice.

## Patentansprüche

1. Bohrer mit mindestens einer Schneidfläche (12), deren Rand, der sich an der Umfangsfläche des Werkzeugs befindet, eine Schneidkante (16) bildet, die schraubenförmig verläuft, wobei die Schneidfläche eine Wand einer schraubenförmigen Spannute (11) zum Abheben der Späne bildet, wobei der Bohrer eine Spitze von allgemein konischer Form aufweist, **dadurch gekennzeichnet, daß** die Schneidfläche (12) im Querschnitt senkrecht zur Achse des Werkzeugs ein geradliniges Profil hat und in Höhe der Spitze eine Stirnschneidkante (20) bildet, wobei eine Hinterschneidung (26, 27) in der Spitze zwischen dem der zentralsten Bereich der Stirnschneidkante (20) und dem Kern des Bohrers ausgebildet ist, damit die Stirnschneidkante (20) sich zur Achse hin verlängert, wobei diese Hinterschneidung in der Spannute (11) an ihrem Ende mündet und eine Spanfläche (27) im wesentlichen in Fortsetzung der Schneidfläche (12) aufweist.

2. Bohrer nach Anspruch 1, **dadurch gekennzeichnet, daß** der Spiralwinkel der Schneidkante (16) zwischen 5 und 20° liegt.

3. Bohrer nach Anspruch 1, **dadurch gekennzeichnet, daß** die Spannute (11) eine komplementäre Fläche (13) aufweist, die sich zwischen dem zentralen Rand der Schneidfläche, der zum Kern des Bohrers hin angeordnet ist, und dem Umfang des Bohrers erstreckt, indem sie mit der Schneidfläche einen Winkel von 90 bis 110° bildet.

4. Bohrer nach Anspruch 3, **dadurch gekennzeichnet, daß** der zwischen der Schneidfläche (12) und der komplementären Fläche (13) der Spannute gebildet Winkel ein scharfkantiger Winkel ist.

5. Bohrer nach Anspruch 1. **dadurch gekennzeichnet, daß** der Bereich der Stirnschneidkante (20), der von der Achse des Bohrers entfernt liegt, in bezug auf die Achse verschoben ist und sich bis zu dieser letzteren durch eine Abfasung verlängert (25).

6. Bohrer nach Anspruch 5, **dadurch gekennzeichnet, daß** die Abfasung (25) der Stirnschneidkante von einer Vertiefung geformt wird, die in der Spanfläche (27) bis zur Achse durchgeführt wird, wobei diese Vertiefung durch eine Bohrerfase (29) mit der Spanfläche verbunden ist.

7. Bohrer nach Anspruch 1, **dadurch gekennzeichnet, daß** zumindest die den seitlichen und stirnseitigen Schneidflächen (16, 20) benachbarten Flächen mit einer chemischen oder physikalischen Schicht in der Dampfphase auf der Basis von einem oder mehreren der folgenden Elemente überzogen werden: Titan, Aluminium, Stickstoff.

8. Verfahren zur Herstellung eines Bohrers nach Anspruch 1, **dadurch gekennzeichnet, daß** die Flächen (12, 13) der Spannute (11), und insbesondere die Schneidfläche (12), durch Schleifen mit einer Schleifscheibe (40) erhalten werden, deren Profil dem Profil der Spannute entspricht und deren Drehachse (41) in einer Ebene parallel zur Achse des Bohrers in bezug auf die Achse des Bohrers um einen vorbestimmten Winkel geneigt ist, der dem Spiralwinkel entspricht.

## Claims

1. Drill having at least one cutting face (12) whose edge, situated at the peripheral surface of the tool, forms a cutting edge (16) extending helically, the cutting face constituting a wall of a helical flute (11) for discharging the swarf, the drill having a tip with a conical shape overall, **characterised in that** the said cutting face (12) has, in cross-section perpendicularly to the axis of the tool, a rectilinear profile, and forms, at the tip, a front cutting edge (20), a relief (26, 27) is produced in the tip between the most central part of the front cutting edge (20) and the core of the drill so that the front cutting edge (20) is extended towards the axis, this relief emerging in the flute (11) at its end, and having a leading face (27) substantially continuous with the cutting face (12).

2. Drill according to Claim 1, **characterised in that** the helix angle of the cutting edge (16) is between 5° and 20°.

3. Drill according to Claim 1, **characterised in that** the flute (11) has a complementary face (13) extending between the central edge of the cutting face, situated towards the core of the drill, and the periphery of the tool, forming an angle of 90° to 110° with respect to the cutting face.

4. Drill according to Claim 3, **characterised in that** the angle formed between the cutting face (12) and the complementary face (13) of the flute is an acute angle.

5. Drill according to Claim 1, **characterised in that** the part of the front cutting edge (20) situated at a distance from the axis of the drill is offset with respect to the said axis, and extends as far as the latter through a bevel (25).

6. Drill according to Claim 5, **characterised in that** the bevel (25) on the front cutting edge is formed by a hollow produced in the leading face (27) until it joins the axis, this hollow being connected to the said leading face by a chamfer (29).

7. Drill according to Claim 1, **characterised in that** at least the faces adjacent to the cutting edges (16, 20) are coated by means of a chemical or physical vapour deposition based on one or more of the following elements: titanium, aluminium, nitrogen.

8. Method of producing a drill according to Claim 1, **characterised in that** the surfaces (12, 13) of the flute (11) and notably the cutting face (12) are obtained by grinding with an abrasive wheel (40) having a profile corresponding to the profile of the flute and whose axis of rotation (41) is, in a plane parallel to the axis of the drill, inclined with respect to the axis of the drill by a predetermined angle corresponding to the helix angle.
